# EUROPEAN PATENT APPLICATION

(11) **EP 1 582 579 A2**
(43) Date of publication of application: **05.10.2005**
(21) Application number: 05290685.6
(22) Date of filing: 29.03.2005
(51) Int. Cl.: C11D 3/37

(54) **Detergent and fabric care additive containing carboxylic acid polymer**

(30) Priority: 29.03.2004 JP 2004094394; 29.03.2004 JP 2004095349
(71) Applicant: NIPPON SHOKUBAI CO., LTD., Osaka 541-0043 (JP)
(72) Inventor: Kanzaki, Akihiko, Suita-shi Osaka 564-0024 (JP); Fujii, Yoshikazu, Suita-shi Osaka 564-0024 (JP); Hemmi, Akiko, Osaka-shi Osaka 533-0005 (JP); Yamada, Satoshi, Suita-shi Osaka 564-0025 (JP); Toriya, Shuichi, Suita-shi Osaka 564-0024 (JP); Yamaguchi, Shigeru, Yao-shi Osaka 581-0872 (JP)
(74) Representative: Hubert, Philippe

(57) **Abstract**

The present invention provides a detergent and fabric care additive containing a high molecular weight carboxylic acid polymer excellent in solubility in the use of a fabric treatment product such as a detergent and fabric care additive. A detergent and fabric care additive containing a carboxylic acid polymer powder, wherein the carboxylic acid polymer powder satisfies the following conditions (a) and (b) [(a) at least one of conditions that a 0.2% by weight aqueous solution has a viscosity of 10 mPa.s or higher and that a 1% by weight aqueous solution has pH lower than 6 and a 10% by weight aqueous solution has a viscosity of 300 mPa.s or higher and (b) at least one of conditions that 50% by weight or more of the carboxylic acid polymer powder passes through 20 mesh of a sieve according to JIS (Z8801) and that the average particle diameter is 600 µm or smaller]. A detergent and fabric care additive containing a carboxylic acid polymer powder, wherein the carboxylic acid polymer powder satisfies the following conditions (c) and (d) [(c) a 0.2% by weight aqueous solution of the carboxylic acid polymer powder has a viscosity of 10 mPa.s or higher and (d) the carboxylic acid polymer powder contains a carboxyl group and a sulfonic acid group and the ratio of the sulfonic acid group-containingmonomer relative to 100% by mole of all monomers comprising the polymer is not less than 0.5% by mole and not more than 90% by mole].

## Description

### TECHNICAL FIELD

The present invention relates to a detergent and fabric care additive containing a high molecular weight carboxylic acid polymer excellent in solubility.

### BACKGROUND ART

So far, as polymers capable of forming water-soluble or water-dispersible coatings on fiber products to increase the affinity for objects to be washed and the fixation on the object surface at the time of washing, water-soluble polymer substances have been disclosed as components to be added to detergents and treatment agents for clothing (stain-prevention agents, etc.). For example, Japanese Kokai Publication Hei-9-273079 discloses a stain-prevention agent composition which is applied to fiber products in wet state and contains a polymer capable of forming a water-soluble or water-dispersible coating on the fiber product dried after use of the stain-prevention agent composition, and Japanese Kokai Publication Hei-2003-3198 discloses a detergent composition whose main washing ability is obtained by an alkali and which contains inorganic salts of sodium and potassium as main components, and contains carbonate ion, hydrogen carbonate ion, sodium ion, and potassium ion in form of an aqueous solution.

In recent years, according to save energy and installation space, a downsized washing machine and dishwasher tend to reduce washing water and washing time. Therefore, the solubility of various detergents used for the washing becomes more important to exhibit the ability of the detergents.

However, when a technique disclosed in Japanese Kokai Publication Hei-9-273079 was developed, the matters of the solubility was not so much concerned and when a technique disclosed in Japanese Kokai Publication Hei-2003-3198 was developed, the solubility matter was recognized, but from the viewpoint of solubility, only poly(vinyl alcohol) was recognized, and carboxylic acid polymer was not. Further, to improve a solubility of poly(vinyl alcohol), a solution method proposed was only that poly (vinyl alcohol) having a lower viscosity, that was, a lower molecular weight, was used more preferably.

### BRIEF SUMMARY OF THE INVENTION

In view of the above-mentioned state of the art, it is an object of the present invention to provide a detergent and fabric care additive that may improve solubility, and may exhibit performance, for example, in a water-saving washing machine.

As a result of wholehearted examination for solving the above-mentioned subjects repeatedly carried out by the present inventors, it was found that a particle diameter of a carboxylic acid polymer powder significantly affects the solubility, and finally was found that when a particle diameter of a carboxylic acid polymer powder is a specified value or lower, the solubility is remarkably improved. Also, inventors have assumed that a monomer composition of a carboxylic acid polymer powder significantly affects a solubility of the carboxylic acidpolymer powder and have found that a sulfonic acid group-containing carboxylic acid polymer powder is considerably improved in solubility, leading to completion of the present invention.

That is, the present invention provides a detergent and fabric care additive containing a carboxylic acidpolymer powder,
wherein the carboxylic acid polymer powder satisfies the following conditions (a) and (b);
(a) at least one of conditions;
   that a 0.2% by weight aqueous solution has a viscosity of 10 mPa.s or higher, and
   that a 1% by weight aqueous solution has pH lower than 6 and a 10% by weight aqueous solution has a viscosity of 300 mPa.s or higher,
(b) at least one of conditions;
   that 50% by weight or more of the carboxylic acid polymer powder passes through 20 mesh of a sieve according to JIS (Z8801), and
   that the average particle diameter is 600 µm or smaller.

That is, the carboxylic acid polymer powder satisfies at least one of the following conditions (1) and (2), and at least one of the conditions (3) and (4)
(1) a 0.2% by weight aqueous solution has a viscosity of 10 mPa.s or higher
(2) a 1% by weight aqueous solution has pH lower than 6, and a 10% by weight aqueous solution has a viscosity of 300 mPa.s or higher,
(3) 50% by weight or more of the carboxylic acid polymer powder passes through 20 mesh of a sieve according to JIS (Z8801) and
(4) the average particle diameter is 60 µm or smaller.

The present invention also provides a detergent and fabric care additive containing a carboxylic acid polymer powder,
wherein the carboxylic acid polymer powder satisfies the following conditions (c) and (d);
(c) a 0.2% by weight aqueous solution of the carboxylic acid polymer powder has a viscosity of 10 mPa.s or higher,
(d) the carboxylic acid polymer powder contains a carboxyl group and a sulfonic acid group and the ratio of the sulfonic acid group-containing monomer relative to 100% by mole of all the monomers comprising the polymer is not less than 0.5% by mole and not more than 90% by mole.

The detergent and fabric care additive means those used as so-called detergent or fabric care additive and may be used for both applications. The detergent means those having stain removal performance in clothes and dishes, so-called cleaner and bleaching agent, and the fabric care additive or fabric-treating agent (fabric treatment) means those having stain adhesion prevention abilities in clothing items such as clothes.

### DETAILED DESCRIPTION OF THE INVENTION

A detergent and fabric care additive according to the present invention will, hereinafter, be described in detail, but the scope of the present invention is not limited to the following descriptions, and various modifications other than the following embodiments may be properly made in a range that dose not impair spirits of the present invention.

### [Carboxylic acid polymer powder and its production method]

The above-mentioned carboxylic acid polymer is not especially limited, and includes specifically homopolymers of monomers containing carboxyl group and/or its salts; and copolymers of monomers containing carboxyl group and/or its salts and other monomers, etc. Among the illustrated polymers, copolymers obtained by polymerizing monomer components including the monomer containing carboxyl group and/or its salts are more preferable, and above all, copolymers of the monomers containing carboxyl group and/or its salts and monomers containing sulfonic acid group and/or its salts are still more preferable. Introduction of sulfonic acid group makes the carboxylic acid polymer powder difficult to be a bridged powder and improves a dissolution speed of a carboxylic acid polymer powder. Further, sulfonic acid group is good in a gelation resistance to a polyvalent ion such as calcium ion and magnesium ion contained in a detergent solution, and inhibits the insolubilization of the carboxylic acid polymer caused by the polyvalent ion.

In the present invention, "carboxyl group" includes salts such as alkali metal salts and ammonium salt of this functional group in addition to -COOH group (free carboxyl group). Also, "sulfonic acid group" in the present invention includes salts such as alkali metal salts and ammonium salt of this functional group in addition to -SO₃H group (free sulfonic acid group).

The above-mentioned polymer may easily be obtained by polymerizing monomer components containing, for example, amido group-containing monomers, monomers containing carboxyl group and/or its salts and monomers containing sulfonic acid group and/or its salts and as necessary, othermonomers copolymerizable with the above-mentioned monomers (hereinafter, simply referred to as other monomers).

The above-mentioned amido group-containing monomers are not especially limited when they are monomers having amido groups. Specifically, as the amido group-containing monomers, (meth)acrylamide, etc, may be illustrated.

The above-mentioned monomers containing carboxyl group and/or its salts are not especially limited when they are monomers having carboxyl group and/or its salts. As the carboxyl group-containing monomers include specifically acrylic acid, methacrylic acid, crotonic acid, vinyl acetate, maleic acid, itaconic acid, mesaconic acid, fumaric acid, citraconic acid, N-(meth)acryloylaspartic acid, etc. Also, the monomers containing carboxyl group salt includes specifically sodium salt, potassium salt, calcium salt, ammonium salt, etc. But they are not especially limited. These monomers may be used independently or two or more of them in combination. Among the above illustrated monomers, (meth)acrylic acid and/or their salts are more preferable and (meth) acrylic acid (in the present invention, acrylic acid and/or methacrylic acid are meant) are still more preferable.

The above-mentioned monomers containing sulfonic acid group and/or its salts are not especially limited when they are monomers having sulfonic acid group and/or its salts. The sulfonic acid group-containing monomers include specifically 2-acrylamido-2-methylpropanesulfonic acid, (meth)allylsulfonic acid, allyloxybenzenesulfonic acid, 2-hydroxy-3-(2-propenyloxy)propanesulfonic acid, isopropenylsulfonic acid, styrenesulfonic acid, vinylsulfonic acid, sulfoethyl (meth)acrylate, and sulfonated product of isoprene, etc. The monomer containing the sulfonic acid group salt includes specifically sodium salt, potassium salt, calcium salt, ammonium salt, etc., but they are not limited especially. These monomers may be used independently or two or more of them in combination. Among the above illustrated monomers, 2-acrylamido-2-methylpropanesulfonic acid, sulfoethyl (meth) acrylate, and alkali metal salts and ammonium salt of these monomers are more preferable, sulfoethyl (meth)acrylate is furthermore preferable, and 2-acrylamido-2-methylpropanesulfonic acid is still more preferable.

Above-mentioned other monomers are not especially limited when they are monomers copolymerizable with the amido group-containing monomers, monomers containing carboxyl group and/or its salts and monomers containing sulfonic acid group and/or its salts. That is, the structural units other than the amido group-containing monomer units, monomer units containing carboxyl group and/or its salts and monomer units containing sulfonic acid group and/or its salts which may be contained in the polymer of the present invention are not especially limited.

Other monomers include monoethylenic unsaturated acid such as allylsulfonic acid, isopropenylphosphonic acid, vinylphosphonic acid, and alkali metal salts and ammonium salt of these monomers; esters of polyalkylene glycol and the above-mentionedmonomers containing carboxyl group and its salts such as polyethylene glycol (meth)acrylate and methoxypolyethylene glycol (meth) acrylate; (meth) acrylic acid esters such as methyl (meth)acrylate, ethyl (meth)acrylate, butyl (meth)acrylate, isobutyl (meth)acrylate, hydroxyethyl (meth)acrylate, hydroxypropyl (meth)acrylate, and N,N-dimethylaminoethyl (meth)acrylate; vinyl esters such as vinyl acetate, vinyl propionate, vinyl pivalate, vinyl benzoate, and vinyl cinnamate; alkyl vinyl ethers such as methyl vinyl ether, and ethyl vinyl ether; unsaturated alcohols such as allyl alcohol, methallyl alcohol, 3-methyl-3-butene-1-ol, 3-methyl-2-butene-1-ol and 2-methyl-3-butene-2-ol; aldehyde group-containing vinyl monomers such as acrolein; nitrile group-containing vinyl monomers such as (meth) acrylonitrile; amide monomers such as (meth)acrylamide and N-tert-butylacrylamide; monomers containing functional groups other than the above illustrated functional groups such as phosphoethyl methacrylates, styrene, ethylene oxide adducts (compounds obtained by adding alkylene oxide having 2 to 18 carbon atoms 1 to 300 moles, preferably 3 to 100 moles, more preferably 5 to 80 moles to the above -mentioned unsaturated alcohol) of allyl alcohol and isoprenol, N-vinyl-2-pyrolidone, N-vinylacetamide, N-vinyl formamide, and allylamine.

Above illustrated other monomers may be used independently or two or more of them in combination, as necessary. Among the illustrated other monomers, methyl (meth)acrylate, hydroxyethyl (meth)acrylate and N-vinyl-2-pyrrolidone are especially preferable. Also, to obtain a desired viscosity, monomers having two or more polymerizable unsaturated bonds are preferably used. Specifically, acrylic acid esters, methacrylic acid esters, allyl ethers, maleic acid esters, and fumaric acid esters of polyols having two or more substituent groups may be illustrated. Examples of the above-mentioned polyols are ethylene glycol, propylene glycol, polyethylene glycol, polypropylene glycol, glycerin, polyglycerin, trimethylolpropane, pentaerythritol, sucrose, and sorbitol, etc. Further, bisacrylamides such as N,N-bismethyleneacrylamide; allyl esters such as acrylic acid and methacrylic acid; diallyl phthalate, triallyl phosphate, tetraallyloxyethane, divinyl adipate, vinyl crotonate, 1,5-hexadiene, and divinylbenzene, etc may be illustrated. Additionally, in the case where these monomers having two or more polymerizable unsaturated bonds are added, the addition amount of the monomers is preferably 1 to 100000 ppm, more preferably 10 to 50000 ppm, further more preferably 100 to 30000 ppm, and still more preferably 1000 to 10000 ppm in all the monomers. When they are added in an amount exceeding 100000 ppm, themonomers may become three-dimensional and produce gel insoluble in water or scarcely swollen in water.

A production method of the above-mentioned polymer, that is, a polymerization method of the above-mentioned monomer components, is not especially limited and for example, conventionally known various methods such as a polymerization method using a polymerization initiator such as a radical polymerization initiator; a polymerization method irradiating electromagnetic wave such as nuclear radiation including ionization radiation and electron beam, or ultraviolet ray. A polymerization method by heating may be illustrated and further two or more of these polymerization methods may be employed in combination.

The polymerization method in the present invention is a solution polymerization carried out polymerization in the presence of a solvent, and besides, a suspension polymerization may also be employed. These methods may be carried out in either batch-manner or continuous-manner.

In the case where carboxylic acid polymer is made a powder, water is evaporated from the above-mentioned mixed solution and the obtained carboxylic acid polymer is dried, crushed, and as necessary, classified to obtain the carboxylic acid polymer with a desired particle diameter to be described later.

As the above-mentioned radical polymerization initiator, peroxides, redox, and azo initiators may be used, and specifically, peroxides suitably used in peroxide and redox initiators such as ammonium persulfate, potassium persulfate, hydrogen peroxide, benzoyl peroxide, and tert-butyl peroxide; reducing agents suitable for redox initiators such as sodium hydrogen sulfite, sodium metabisulfate, ammonium ferrous sulfate, L-ascrobic acid, and triethanolamine; and azo initiators such as 2,2'-azobis(2,4-dimethylvaleronitrile), 2,2'-azobis(2-aminopropane) dihydrochloride, 2,2'-azobisisobutylamide dehydrate, 2,2'-azobis[2-(2-imidazolin-2-yl)propane] dihydrochloride may be illustrated, but they are not especially limited. The use amount of the polymerization initiator used and reaction conditions for the polymerization reaction are not especially limited.

In this embodiment, among the above illustrated polymers, homopolymers of monomers containing carboxyl group and/or its salts (hereinafter, referred to as homopolymer A) and copolymers of monomers containing carboxyl group and/or its salts and monomers containing sulfonic acid group and/or its salts (hereinafter, referred to as copolymer B) will, hereinafter, be described.

Copolymer B may be produced by, for example, a post-modification introducing sulfonic acid group into polymer B obtained by polymerization of a monomer containing the monomer containing carboxyl group and/or its salts and as necessary, a monomer containing sulfonic acid group and/or its salts and other monomers. The production method will, hereinafter, be described in detail.

As the copolymer B in this embodiment, a copolymer obtained by polymerization of monomer components containing (meth)acrylic acid and 2-acrylamido-2-methylpropanesulfonic acid among the above-illustrated monomers is most preferable. Since (meth) acrylic acid is very easy to dissolve in water, a dissolution speed is relatively high. Also, 2-acrylamido-2-methylpropanesulfonic acid has a relatively low moisture absorption property. Accordingly, the copolymer obtained by copolymerization of the (meth) acrylic acid and the 2-acrylamido-2-methylpropanesulfonic acidmay be changed in the mixing ratio of the monomers and have a relatively high solubility in water, resulting in suitable use.

In this embodiment, a ratio of the monomer containing carboxyl group and/or its salts in the above-mentioned monomer components, that is, a ratio of the monomer unit containing carboxyl group and/or its salts in the entire monomer units composing the above-mentioned copolymer B, is preferably not less than 50% by mole and not more than 99.5% by mole, more preferably not less than 55% by mole and not more than 99% by mole, further preferably not less than 60% by mole and not more than 98.5% by mole, furthermore preferably not less than 65% by mole and not more than 98% by mole, still more preferably not less than 70% by mole and not more than 97% by mole. When the ratio of the monomer containing carboxyl group and/or its salts is not less than 50% by mole, a less additional amount of the copolymer B to a detergent may be realized. The ratio of the monomer containing the carboxyl group and/or its salts is irrelevant to the numbers of the carboxyl groups contained in the monomer containing carboxyl group and/or its salts, and for example, when the polymer is a homopolymer, the ratio of the monomer unit containing carboxyl group and/or its salts is 100% by mole in both cases of polymerization using a monocarboxylic acid monomer and polymerization using a dicarboxylic acid monomer.

In this embodiment, a ratio of the monomer containing sulfonic acid group and/or its salts in the above-mentioned monomer components, that is, a ratio of the monomer unit containing sulfonic acid group and/or its salts in the entire monomer units composing the above-mentioned copolymer B, is preferably not less than 0.5% by mole and not more than 90% by mole, more preferably not less than 1% by mole and not more than 70% by mole, further preferably not less than 1.5% by mole and not more than 50% by mole, furthermore preferably not less than 2% by mole and not more than 40% by mole, still more preferably not less than 3% by mole and not more than 30% by mole. When the ratio of the monomer containing sulfonic acid group and/or its salts is not less than 0.5% by mole, the dissolution speed of the copolymer B in water may be more improved. Also, when the ratio of the monomer containing sulfonic acid group and/or its salts is not more than 90% by mole, a less additional amount of the copolymer B to a detergent may be realized.

In other words, it is preferable that the copolymer B according to the embodiment contains carboxyl group and sulfonic acid group and has a ratio of the monomer unit containing sulfonic acid group and/or its salts not less than 0.5% by mole and not more than 50% by mole in the entire monomer units composing the copolymer B or that the copolymer B contains carboxyl group and sulfonic acid group and has a molar ratio of carboxyl group and sulfonic acid group in range of (99.3 : 0.5) to (1 : 1). Additionally, the molar ratio of carboxyl group and sulfonic acid group in the copolymer B may be easily calculated according to a conventional method, for example, by colloid titration using an aqueous solution adjusted to pH 2 and an aqueous solution adjusted to pH 10.

Carboxyl groups contained in the above-mentioned homopolymer A and copolymer B, that is, carboxyl groups of the monomer containing carboxyl group and/or its salts and composing the above-mentioned homopolymer A and copolymer B may exist in formof free acid or a salt, but existence in form of free carboxyl group is more preferable. The salts include specifically, alkali metal salts such as sodium salt and potassium salt; alkaline earth metal salts such as calcium salt and magnesium salt; ammonium salt; and ammine salt, etc, and sodium salt is preferable.

A ratio of free carboxyl group in the carboxyl groups contained in the above-mentioned homopolymer A and copolymer B is preferably not less than 5% by mole, more preferably not less than 20% by mole and not more than 99% by mole, further preferably not less than 30% by mole and not more than 97% by mole, furthermore preferably not less than 40% by mole and not more than 95% by mole, still more preferably not less than 50% by mole and not more than 90% by mole.

When the ratio of the free carboxyl group is less than 5% by mole, that is, a neutralization ratio of the homopolymer A and copolymer B exceeds 95% by mole, the homopolymer A and copolymer B may form a bridged powder. The copolymer B in the embodiment may be produced by the above-mentioned polymerization method of polymerizing the monomer components and also may be produced by, for example, a post-modification introducing sulfonic acid group into a polymer (hereinafter, referred to as a polymer for modification) obtained by polymerization of monomer components (hereinafter, referred to as monomer components for modification) containing the monomer containing carboxyl group and/or its salts and as necessary, the monomer containing sulfonic acid group and/or its salts and other monomers.

The monomer containing carboxyl group and/or its salts the monomer containing sulfonic acid group and/or its salts and other monomers contained in the monomer components for modification specifically include the above illustrated various compounds. A method for obtaining the polymer for modification by polymerization of the monomer components for modification include the above illustrated various methods. As the polymer for modification, specifically, poly[(meth)acrylic acid] is preferable and poly(acrylic acid) is more preferable.

Methods for the post-modification introducing sulfonic acid group into the polymer for modification, a method for reacting a sulfonic acid group-introducing compound to a polymer for modification is preferable and more specifically, a method for ester bonding of carboxyl group contained in the polymer for modification and hydroxyl group contained in a sodium isethionate (sodium hydroxyethanesulfonate) as a sulfonic acid group-introducing compound, a method for amido bonding of carboxyl group contained in the polymer for modification and amino group contained in a taurine sodium salt (sodium aminoethanesulfonate) as a sulfonic acid group-introducing compound, and a method for sulfonating the polymer for modification using fuming sulfuric acid, etc, as the sulfonic acid group-introducing compound, etc. But the method is not especially limited.

The above-mentioned sulfonic acid group-introducing compound may include those which may introduce the sulfonic acid group into the polymer for modification and is not especially limited. As the sulfonic acid group-introducing compounds include, specifically, compounds suitable for forming ester bond such as sodium hydroxymethanesulfonate, sodium hydroxyethanesulfonate, and sodium hydroxypropanesulfonate; compounds suitable for forming amido bond such as sodium aminomethanesulfonate, sodium aminoethanesulfonate, and sodium aminopropanesulfonate; and fuming sulfuric acid, etc.

A reaction method of the post-modification may be carried out by, for example, mixing the polymer for modification and the sulfonic acid group-introducing compound and heating the mixture, and the method is not especially limited. Reaction conditions for post-modification such as an amount of the sulfonic acid group-introducing compound used in an amount of the polymer for modification may properly be set depending on the composition of the polymer for modification, the type of the sulfonic acid group-introducing compound, and combination of both, etc and the conditions are not especially limited. To increase a ratio of sulfonic acid group to the copolymer B (the copolymer B containing carboxyl group and sulfonic acid group) obtained by the above-mentioned polymerization method of polymerizing the monomer components, as necessary, the above-mentioned post-modification may be carried out.

The copolymer B according to the embodiment obtained by post-modification of polymer for modification preferably contains carboxyl group and sulfonic acid group and has a ratio ranging from 0.5% by mole to 50% by mole of the monomer unit containing sulfonic acid group and/or its salts in the entire monomer units composing the copolymer B or more prefarably contains carboxyl group and sulfonic acid group and has a molar ratio of carboxyl group and sulfonic acid group ranging from (99.5 : 0) to (1 : 1).

A content of unreacted (meth) acrylic acid monomer in the carboxylic acid polymer to be added to a detergent and fabric care additive of the present invention is preferably not more than 2.0% by weight (mass %), more preferably not more than 1.5% by weight, further preferably not more than 1.3% by weight, furthermore preferably not more than 1.1% by weight, and still more preferably not more than 1.0% by weight on the basis of (meth)acrylic acid. When the content of unreacted (meth) acrylic acid monomer is more than 2.0% by weight, problems of malodor may occur.

The detergent and fabric care additive of the present invention includes a detergent (washing agent) and a fabric care additive (fabric-treating agent or fabric treatment) and means the detergent and fabric care additive. Such detergent and fabric care additive contain a carboxylic acid polymer powder satisfying the following conditions (a) and (b);
(a) at least one of conditions that a 0.2% byweight aqueous solution has a viscosity of 10 mPa.s or higher and that a 1% by weight aqueous solution has pH lower than 6 and a 10% by weight aqueous solution has a viscosity of 300 mPa.s or higher,
(b) at least one of conditions that 50% by weight or more of the carboxylic acid polymer powder passes through 20 mesh of a sieve according to JIS (Z8801), and that the average particle diameter is 600 µm or smaller.

In other words, the detergent and fabric care additive in the present invention are characterized in that they contain a carboxylic acid polymer powder satisfying the following conditions (a) and (b);
(a) that a 0.2% by weight aqueous solution has a viscosity of 10 mPa . s or higher and/or that a 1% by weight aqueous solution has pH lower than 6 and a 10% by weight aqueous solution has a viscosity of 300 mPa.s or higher,
(b) that 50% byweight ormore of the carboxylic acidpolymer powder passes through 20 mesh of a sieve according to JIS and/or that the average particle diameter is 600 µm or smaller.

A viscosity of the carboxylic acid polymer powder to be added to a detergent and fabric care additive of the present invention satisfies the above-mentioned condition (a) and therefore satisfies the following conditions (1) and/or (2). Since a solutions of carboxylic acid polymer has various viscosities depending on pH even when a same weight average molecular weight, a pH measurement method and viscosity measurement method for an aqueous solution may be selected depending on a pH of an aqueous solution of the carboxylic acid polymer powder.

Regardless of a pH of an aqueous solution of a carboxylic acid polymer powder, preferably the condition (1) is satisfied. In the case where the condition (1) is not satisfied and a 1% by weight aqueous solution has pH (25°C) lower than 6, preferably the condition (2) is satisfied.
(1) The viscosity of a 0.2% by weight aqueous solution is 10 mPa.s or higher. As preferable ranges in the case of (1), the viscosity of a 0.2% by weight aqueous solution at 25°C is not lower than 10 mPa.s and not higher than 10000 mPa.s, preferably not lower than 20 mPa.s and not higher than 5000 mPa.s, more preferably not lower than 30 mPa.s and not higher than 4000 mPa.s, furthermore preferably not lower than 40 mPa.s and not higher than 3000 mPa.s, and still more preferably not lower than 50 mPa.s and not higher than 2000 mPa.s.
(2) The pH of a 1% by weight aqueous solution is not lower than 6,and the viscosity of a 10% by weight aqueous solution is not lower than 300 mPa.s. As preferable ranges in the case of (2), the viscosity of a 10% by weight aqueous solution is not lower than 300mPa.s and not higher than 5000 mPa.s, preferably not lower than 350 mPa.s and not higher than 4500 mPa.s, more preferably not lower than 400 mPa.s and not higher than 4000 mPa.s, furthermore preferably not lower than 450 mPa.s and not higher than 3500 mPa.s, and still more preferably not lower than 500 mPa.s and not higher than 3000 mPa.s.

In the case of (1), when a viscosity of a 0.2% by weight aqueous solution is lower than 10 mPa.s and in the case of (2), when a viscosity of a 10% by weight aqueous solution is lower than 300 mPa.s, a molecular weight of the carboxylic acid polymer is low and therefore, sufficient exhibition of performance as a detergent may not be obtained, and in the case of (1), when a viscosity of a 0.2% by weight aqueous solution is higher than 10000 mPa.s and in the case of (2), when a viscosity of a 10% by weight aqueous solution is higher than 5000 mPa.s, a viscosity of the detergent solutionmaybe too high, leading to inefficiency in rinse.

A weight average molecular weight of the carboxylic acid polymer of the present invention is preferably not lower than 100000 and not higher than 10000000. It is preferably not lower than 200000 and not higher than 10000000, more preferably not lower than 250000 and not higher than 9000000, further preferably not lower than 300000 and not higher than 8000000, furthermore preferably not lower than 400000 and not higher than 7000000, and still more preferably not lower than 500000 and not higher than 5000000. When a weight average molecular weight is lower than 100000, a molecular weight of the carboxylic acid polymer is low, leading to poor exhibition of performance as a detergent, and when a weight average molecular weight exceeds 10000000, a viscosity of the detergent solution may be too high, leading to inefficiency in rinse

The above-mentioned weight average molecular weight may be measured by the following gel permeation chromatography (GPC) analysis.

### GPC conditions:

Eluent: 0.2 M sodium nitrate, 0.01 M sodium dihydrogen phosphate, pH 7 ;
Flow rate: 0.5 ml/min;
Detector: differential refractometer;
Column: manufactured by Polymer Laboratories, Ltd.,
Aquagel-OH 60 15 µm 300 × 7.5 mm 1 piece,
Aquagel-OH 40 15 µm 300 × 7.5 mm 1 piece;
Injection amount: 200 µl
Sample concentration: 0.05% by weight;
Column temperature: 35°C; and
Standard sample: poly(sodium acrylate) manufactured by Sowa Kagaku Co., Ltd., and poly (sodium acrylate) manufactured by Wako Pure Chemical Industries, Ltd.

An unreacted monomer amount may be measured by a following liquid chromatography (HPLC) analysis.
Apparatus: D-7000 model HPLC (manufactured by Hitachi Ltd.);
Column: Shodex RSpak DE-41 (trade name; manufactured by Showa Denko K.K.)
Eluent: 0.1% by weight phosphoric acid aqueous solution;
Flow rate: 1 mL/min;
Column temperature: 40°C;
UV wavelength: 200 nm; and
Measurement solution: 0.0.2% by weight aqueous solution.

A particle diameter of the carboxylic acid polymer powder to be added to a detergent and fabric care additive of the present invention satisfies the above-mentioned condition (b) and therefore satisfies the following conditions (3) and/or (4).
(3) 50% by weight or more of the carboxylic acid polymer powder passes through 20 mesh of a sieve according to JIS (Z8801). As preferable ranges in the case of (3), the powder contains particles with particle diameter under 20 mesh (750 µm) and over 300 mesh (30 µm) of JIS sieves (Japanese Industrial Standard) of not less than 50% by weight, preferably not less than 60% by weight, more preferably not less than 70% by weight, furthermore preferably not less than 75% by weight, and still more preferably not less than 80% by weight JIS sieves are those described in JIS Z8801.
(4) The average particle diameter is not larger than 600 µm. As preferable ranges in the case of (4), the average particle diameter is preferably not smaller than 10 µm and not larger than 600 µm, more preferably not smaller than 20 µm and not larger than 550 µm, further preferably not smaller than 30 µm and not larger than 500 µm, furthermore preferably not smaller than 40 µm and not larger than 450 µm, and still more preferably not smaller than 50 µm and not larger than 350 µm.

In the case of (3), when the particles with a diameter, under 20 mesh and over 300 mesh of JIS sieves are less than 50% by weight, especially when the more particles with a diameter over 20 mesh are contained, a solubility in a detergent solution or water is decreased to probably result in increase of undissolved matter and on the contrary, when the more particle with a diameter under 300 mesh is contained, a bridged powder may increase at the time of dissolution in a detergent or water, andpowdering, further moisture absorption of a powder may easily occur.

In the case of (4), when an average particle diameter is smaller than 10 µm, a bridged powder may increase at the time of dissolution in a detergent solution or water, and powdering, further moisture absorption of a powder may easily occur. On the contrary, when an average particle diameter is larger than 600 µm, a solubility of a powder in a detergent solution or water is decreased to probably result in increase of undissolvedmatter. The average particle diameter in this specification means volume average particle diameter as described in Examples.

The carboxylic acid polymer powder of the present invention has provided with a viscosity with which the performance as a detergent is sufficiently exhibited and a particle diameter with high solubility by satisfying the above-mentioned conditions (a) and (b) and therefore the powder is not only excellent as a detergent but also capable of suppressing adhesion of new stains since it forms a water-soluble or water-dispersible coating film on the fiber surface of clothes, leading to sufficient exhibition of effects of the present invention. When the above-mentioned condition (a) or (b) is not satisfied, sufficient exhibition of effects of the present invention as mentioned above may not be obtained. As requirements of the above-mentioned (a) and (b), the carboxylic acid polymer powder of the present invention satisfies at least one of the above-mentioned (1) and (2), and simultaneously satisfies at least one of the above-mentioned (3) and (4), but the carboxylic acid polymer powder preferably satisfies (2) in requirement (a), and simultaneously at least one of the (3) and (4).

A carboxylic acid polymer powder of the present invention also satisfies the following conditions (c) and (d);
(c) a 0.2% by weight aqueous solution of the carboxylic acid polymer has a viscosity of 10 mPa.s or higher,
(d) the carboxylic acid polymer powder contains carboxyl group and sulfonic acid group and the ratio of a sulfonic acid group-containing monomer relative to 100% by mole of on the monomers composing the polymer is not less than 0.5% by mole and not more than 90% by mole.

Namely, a detergent and fabric care additive is also characterized in containing a carboxylic acid polymer powder satisfying the following conditions (c) and (d);
(c) a 0.2% by weight aqueous solution has a viscosity of 10 mPa.s or higher,
(d) the carboxylic acid polymer powder contains carboxyl group and sulfonic acid group, and a ratio of the sulfonic acid group-containing monomer in the total of the monomers composing the polymer is not less than 0.5% by mole and not more than 90% by mole.

As the above-mentioned condition (c), in the case where an aqueous solution of a carboxylic acid polymer powder have a concentration of 0.2% by weight the solution has a viscosity of 10 mPa.s or higher at 25°C, and preferable ranges are the same as those of condition (1) in the above-mentioned condition (a) and as the above-mentioned condition (d) , the condition may be satisfied by using the above-mentioned copolymer B for the carboxylic acid polymer powder.

Effects of the present invention may sufficiently be exhibited when the carboxylic acid polymer powder of the present invention satisfies the above-mentioned conditions (c) and (d), but when the condition (c) or (d) is not satisfied, such effects may not be obtained.

In the case of the above-mentioned condition (c) is not satisfied, a molecular weight of the carboxylic acid polymer is low and the performance as detergent may be insufficient. On the other hand, with respect to the condition (d), when a ratio of a sulfonic acid group-containing monomer is 0.5% by mole or less, a dissolution speed of the carboxylic acid polymer in water may be insufficient and when a ratio is 90% by mole or more, necessity for a large amount of carboxylic acid polymer to be added to a detergent and fabric care additive may occur.

The carboxylic acid polymer powder contains carboxyl group, and satisfies the above-mentioned conditions (a) and (b) or the conditions (c) and (d), and preferably monomers containing a carboxylic acid group are produced by using (meth) acrylic acid. As described, one preferable embodiment of the present invention includes the detergent and fabric care additive in which the carboxylic acid polymer powder comprises a (meth)acrylic acid polymer.

A ratio of the (meth) acrylic acid polymer is not especially limited as long as the (meth) acrylic acid powder is contained in a carboxylic acid polymer and the ratio of the (meth) acrylic acid polymer to the carboxylic acid polymer powder 100 part by weight is preferably 50 to 100 part by weight and more preferably 80 to 100 part by weight. Further preferably, the carboxylic acid polymer powder is a (meth)acrylic acid polymer powder.

Carboxylic acid polymer powders of the present invention preferably contain a surfactant. That is, the present invention preferably includes the detergent and fabric care additive in which the carboxylic acid polymer powder comprises a component derived from a surfactant. As such embodiments, carboxylic acid polymer powder preferably contains surfactant as a component, and the surfactant is preferably made to coexist when the carboxylic acid polymer powder is polymerizes with one or more monomers.

Effects of existence of surfactants in carboxylic acid polymer powder are as follows. A water-soluble polymer containing surfactants takes in water as soon as surfactants on a surface of the polymer is separated to prevent producing a bridged powder and increase the solubility in water.

The reason for attainment of the especially excellent effects by employing the production method of the present invention is as follows. The above-mentioned carboxylic acid polymer may be obtained by polymerizing the monomers composing carboxylic acid polymer and when the polymerization reaction is carried out in a presence of surfactants, after polymerization reaction, a mixed solution of the water-soluble polymer and the surfactant may be obtained. When the obtained carboxylic acid polymer is made to be a powder state, water is evaporated from the mixed solution and then the obtained carboxylic acid polymer is dried and crushed. In the above-mentioned evaporation step, the carboxylic acid polymer is aggregated along with the water evaporation and at that time, surfactants are taken in between molecular chains of the above-mentioned carboxylic acidpolymer. Accordingly, the obtained carboxylic acid polymer contains surfactants not only on the surface but also inside the polymer.

When such carboxylic acid polymers are added to a detergent as described above, they take in water as soon as the surfactant existing on a surface is separated and molecular chains are started to loose, but since the surfactant still exists on the molecular chain surface, the neighboring molecular chains do notadhereandbondtooneanother, and the polymer may be dissolved in the detergent solution. Accordingly, excellent washing ability and treatment ability may be obtained without causing a bridged powder.

A surfactant in the present invention may be used for suppressing an abrupt adhesion and bonding of the carboxylic acid polymer molecules one another solution of a detergent or fabric care additive and for preventing a bridged powder. As surfactants available in the present invention, those which may suppress an adhesion and bonding of the carboxylic acid polymer molecules until the above-mentioned carboxylic acid polymer is well dissolved in solution of a detergent or fabric care additive may be used without any particular limit and known surfactants are available. Specifically, nonionic surfactants are preferable and for example, ether type nonionic surfactants include, polyoxyethylene alkyl ethers such as polyoxyethylene lauryl ether, polyoxyethylene cetyl ether, polyoxyethylene stearyl ether, polyoxyethylene oleyl ether, and polyoxyethylene higher alcohol ether; polyoxyethylene alkyl phenyl ethers such as polyoxyethylene octylphenyl ether and polyoxyethylene nonylphenyl ether; and also polyoxyethylene derivatives and oxyethylene-oxypropyleneblockpolymers, etc. Etherestertype nonionic surfactants include, polyoxyethylene sorbitan mono-, di-, tri-fatty acid esters (fatty acids having 12 to 18 carbon atoms, same for the following fatty acids) such as polyoxyethylene sorbitanmonolaurate, polyoxyethylene sorbitan monopalmitate, polyoxyethylene sorbitan monostearate, polyoxyethylene sorbitan monooleate, and polyoxyethylene sorbitan tristearate, etc;and polyoxyethylenefatty acid esters, etc. Ester type nonionic surfactants include, sorbitan mono-, di-, tri-fattyacidesters suchas sorbitanmonolaurate, sorbitan monopalmitate, sorbitan monostearate, sorbitan monooleate, and sorbitan tristearate; fatty acid monoglycerides; and sucrose esters, etc. Among them, sorbitan fatty acid esters are preferable.

### [Detergent and fabric care additive]

Detergent and fabric care additive of the present invention contains the above-mentioned carboxylic acid polymer powder. Accordingly, it exhibits excellentwashingabilityas a detergent, prevents stains from adhering directly to the fibers themselves of the fiber product by forming a water-soluble or water-dispersible coating on a fiber product after drying by applying to fiber products in wet state after washing and dewatering, promotes the separation of the stains in the next laundering, and prevents stains from adhering to fiber products by above-mentioned single ability or both abilities.

A content of the carboxylic acid polymer in a detergent and fabric care additive of the present invention is preferably 0.001 to 10% by weight, more preferably 0.01 to 8% by weight, further preferably 0.02 to 6% by weight, furthermore preferably 0.03 to 4% by weight, and still more preferably 0.04 to 2% by weight. When a content of the carboxylic acid polymer is too high, a viscosity of a detergent may be too high, leading to inefficiency in rinse, on the other hand, when a content is too low, sufficient exhibition of performance may not be obtained.

A detergent and fabric care additive of the present invention may be in any of the following form, for example, in powder, liquid, or jelly form. As representative examples, a powder detergent in powder state and a liquid detergent in a liquid or jelly form will, hereinafter, be described in detail.

A detergent of the present invention is preferably contains one or more compounds (hereinafter, referred to as "component A") selected from a group consisting of polycarboxylic acids (salts), citric acid salts, zeolites, and laminar silicates. Especially, when the detergent of the present invention is a powder detergent to exhibit excellent washing effects and restaining prevention ability, the component A is essential. On the other hand, when the detergent of the present invention are a liquid detergent, the above-mentioned component A is not necessarily needed, but also in this case, contain of the component A further improves the washing effects and restaining prevention ability. Additionally, in the case where the detergent of the present invention is a liquid detergent and desired to be a transparent liquid detergent, it is preferable to select one or more compounds from a group consisting of polycarboxylic acids (salts), citric acid salts, and laminar silicates among the above-mentioned component A.

The above-mentioned polycarboxylic acids (salts) includes for example, poly(acrylic acid), acrylic acid-maleic acid copolymers, poly(glyoxylic acid), aminocarboxylic acid polymers (e.g. poly (aspartic acid) etc.) and their salts thereof. The salts, include sodium salt, potassium salt, and ammonium salt, etc. A weight average molecular weight of these polycarboxylic acids (salts) is preferably 500 to 150000, more preferably 1000 to 100000, and furthermore preferably 2000 to 50000.

Citric acid salts, include for example, sodium citrate, etc.

The above-mentioned zeolites, include for example, hydrated zeolite A, X, B, and HS, etc.

The above-mentioned laminar silicates, include for example laminar sodium silicate, etc.

In the case where the detergent of the present invention is powder detergent, a content of the component A in the detergent is preferably 0.1 to 50% by weight, more preferably 0.5 to 40% by weight, and furthermore preferably 1 to 30% by weight in total. When the total content of the component A is too high, the surface activation ability tends to reduce and on the other hand, when it is too low, washing effects and restaining prevention ability may be exhibited insufficiently. In the case the detergent of the present invention is a powder detergent, each content of the component A may be set properly depending on type, and in the case of polycarboxylic acids (salts) and citric acid salt, it is preferably 0 to 30% byweight each and in the case of zeolites and laminar silicates, it is preferably 0 to 50% by weight each.

When the detergent of the present invention is a liquid or jelly detergent, the detergent is not necessarily transparent and may be opaque. A content of the component A in the detergent is preferably 0 to 50% by weight, more preferably 0 to 40% by weight, and furthermore preferably 0 to 30% by weight in total. When a total content of the component A is too high, surface activation ability tends to reduce. When the detergent of the present invention is a liquid detergent, each content of the component A may be set properly depending on types and in the case of polycarboxylic acids (salts), citric acid salt and laminar silicates, it is preferably 0 to 30% by weight each and in the case of zeolites, it is preferably 0 to 20% by weight.

The detergent of the present invention may contain further surface treatment agents generally added to a detergent. Surfactants include, specifically, anionic surfactants, nonionic surfactants, cationic surfactants, and amphoteric surfactants, etc. And one or more types of them may be used.

Practical examples of the anionic surfactants are alkylbenzenesulfonic acid salts, alkyl or alkenyl ether sulfuric acid salts, alkyl or alkenylsulfuric acid salts, α-olefinsulfonic acid salts, α-sulfofatty acids or ester salts, alkanesufonic acid salts, saturated or unsaturated fatty acid salts, alkyl or alkenyl ether carboxylic acid salts, amino acid surfactants, N-acylamino acid surfactants, and alkyl or alkenyl phosphoric acid esters and salts thereof.

Examples of the nonionic surfactants are polyoxyalkylene alkyl or alkenyl ethers, polyoxyethylene alkylphenyl ethers, higher fatty acid alkanolamide or alkylene oxide adducts thereof, sucrose fatty acid esters, alkyl glycoxide, fatty acid glycerin mono esters, alkylamine oxides, etc.

The cationic surfactant, include for example, quaternary ammonium salts, etc.

The amphoteric surfactant, include for example, carboxyl type or sulfobetain type amphoteric surfactants, etc.

When the detergent of the present invention is a powder detergent, a content of the surfactants in the detergent is not especially limited, and generally it is preferably 3 to 50% by weight, more preferably 5 to 40% by weight, and furthermore preferably 10 to 35% by weight When surfactants are too much, the cost efficiency tends to be decreased and on the other hand, when they are too little, performance of the detergent may be exhibited insufficiently.

When the detergent of the present invention is a liquid detergent, a content of the surfactants in the detergent is preferably 3 to 60% by weight, more preferably 5 to 50% by weight, and furthermore preferably 10 to 40% by weight. When the surfactants are too much, undesirably compatibility tends to reduce, resulting in reduction of cost efficiency, and on the other hand, when it is too little, performance of the detergent may be exhibited insufficiently.

The detergent of the present invention may further contain a conventionally known builder for detergents. The builders for detergents are not especially limited, and for example, include polyethylene glycol, sodium tripolyphosphate, sodium pyrophosphate, sodium silicate, sodium carbonate, sodium sulfate, sodium nitrilotriacetate, sodium or potassium ethylenediaminetetraacetate, and water-soluble polymers such as carboxyl polymers of polysaccharides and fumaric acid (co)polymer salts, etc. When the detergent contain these builders for detergents, the content may be set in a range that does not impair effects of the present invention.

The detergent of the present invention may further contain various additives conventionally used for detergents. Specifically, stain suppressing agents such as sodium carboxymethylcellulose, benzotriazole, and ethylene-thiourea for preventing readhesion of staining substances; alkali agents (alkaline substances for pH adjustment), fragrance, fluorescent agents,coloring agents,foaming agents,foamstabilizing agents, glazing agents, disinfecting agents, bleaching agents such as sodium percarbonate and sodium perborate; bleach activating agents such as nonanoyloxybenzenesulfonic acid salts and tetraacetylethylenediamine; enzymes, dyes, and solvents such as water may be illustrated. In the case of adding these additives, a content ratio of them may be set properly in a range that does not impair effects of the present invention.

When the detergent of the present invention is a liquid detergent, among the above-mentioned additives, addition of the alkali agents is especially preferable to improve the washing ability, restaining prevention ability, and color transfer prevention ability. The alkali agents are not especially limited and for example, sodium hydroxide, potassium hydroxide, alkanolamine such as monoethanolamine and diethanolamine, silicates, and carbonates are illustrated. In this case, a content of the alkali agents in the detergent is preferably 0.1 to 20% by weight, more preferably 0.5 to 15% by weight, and furthermore preferably 1 to 10% by weight When the alkali agent is less than 0.1% by weight, sufficient washing effects and restaining prevention ability tend not to be exhibited and on the other hand, when it exceeds 20% by weight, undesirably, contact of the agent to skin may cause skin trouble, etc.

The detergent of the present invention may be in form of an intermediate of the detergent, that is, the detergent to which other components such as enzymes and fragrance needed for the detergent are added, or may be the detergent to be used as it is. The detergent of the present inventionmaybe used as various detergents for clothes, shampoo, body soap, laundering tanks, bathing, toilets, floors, carpets, kitchens, dishes, glass, shoes, automobiles, water draining ports, air conditioners, shavers, toothpastes, eye glasses, etc.

As a method for adding the carboxylic acid polymer powder to a powder detergent, various methods of additionmaybe employed. The carboxylic acid polymer powder may be added to the detergent composition slurry before drying and as another method, the carboxylic acidpolymerpowder is dissolved in water and/or other solvents and then the obtained solution is sprayed to the powder detergent to mix them, or the carboxylic acid polymer powder may be mixed as in the powder state with the powder detergent in dry state. In any method, a solubility of the carboxylic acid polymer powder is important.

A fabric care additive of the present invention contains the above-mentioned carboxylic acid polymer as an essential component and in general, optional components are contained in reminder Preferably, both of the carboxylic acid polymer (a) and silicone (b) are contained. The carboxylic acid polymer is added in the above-mentioned range. The silicone (b) is added in an amount of not less than 0.002% by weight and not more than 40% by weight and preferably not less than 0.005% by weight and not more than 15% by weight in fabric care additives. The ratio of the both component in combination is preferably (a)/(b) = (100/1) to (0.05/1) (weight ratio).

A water-soluble organic polymer such as the carboxylic acid polymer (a) and silicone (b) used in the present invention is water soluble and has water-soluble or water-dispersible film formability, so that after applied or sprayed to clothes, the polymer forms a protection film on the fiber surface to prevent stain adhesion. Moreover, because of water-solubility, even when stains adhere to the film, the stains are easy to transfer to washing water in the next laundering.

Fabric care additives of the present invention may contain optionally fragrance, anti-bacterial agents, disinfection agents, coloring agent pigments, fluorescent dyes, and polyhydric alcohol such as propylene glycol and ethylene glycol.

Fabric care additives of the present invention may be applied to fiber products (clothes, towels, sheets, etc) in wet state after washing and dewatering. In that case, the composition of the present invention may be dissolved or dispersed in water before use and then immersed in a washing machine on completion of laundering, or may be sprayed by a manual spray (e.g. by a pump or a trigger), or may be sprayed in form of aerosol together with high pressure gas. Alternatively, the additives may be applied in a container having a discharge port or applied with a porous substance such as sponge. Further, alternatively, the agent may be applied using a tool such as a brush and sponge. Methods for application to clothes and containers for storing the composition of the present invention are not especially limited.

Accordingly, the present invention provides the detergent, in which a high molecular weight carboxylic acid polymer powder is efficiently dissolved and excellent washing ability, for example, in water-saving type washing machine is exhibited, and the fabric care additive which applies to fiber products in wet state and contains a polymer capable of forming a water-soluble or water-dispersible coating on the fiber products after its application and drying.

### BEST MODE FOR CARRYING OUT OF THE INVENTION

The present invention, hereinafter will be described in more detail with reference to Examples and Comparative Examples, but the present invention is not limited to the examples. Hereinafter "part by weight" is represented with simply "part" and "% by weight" with "%" as particular notice is not given.

A volume average particle diameter of a carboxylic acid polymer powder was measured with a particle size distribution meter (Name of model: 9200-FRA, manufactured by Nikkiso Co., Ltd.). The particle diameter obtained in the case of 50% integral in volume distribution (integrated distribution under sieve) was regarded as the average particle diameter. Acetone was used as a solvent.

The viscosities of 10% by weight and 0.2% by weight carboxylic acid polymer powders were measured by a B type viscometer in conditions of rotor No. 2 and 30 rpm at 25°C.

The viscosity was measured by adding 100 ml solution to a tall beaker of 100 mL capacity and rotating the rotor at 30 rpm for 3 minutes without a guard.

The pH of 1% by weight and 0.1% by weight carboxylic acid polymer powders was measured by a pH meter at 25°C. The pH was measured by adding 100 ml solution to a tall beaker of 100 mL capacity, setting a stirrer chip (diameter 7 mm and length 3 cm), immersing the pH meter, and measuring pH after 5 minutes rotation at 200 rpm.

An average molecular weight of the obtained carboxylic acid polymer was measured by the following gel permeation chromatography (GPC) analysis.

### GPC conditions

Eluent: 0.2 M sodium nitrate, 0.01 M sodium dihydrogen phosphate, pH 7;
Flow rate: 0.5 ml/min;
Detector: differential refractometer;
Column: manufactured by Polymer Laboratories, Ltd.,
Aquagel-OH 60 15 µm 300 × 7.5 mm 1 piece,
Aquagel-OH 40 15 µm 300 × 7.5 mm 1 piece;
Injection amount: 200 µl
Sample concentration: 0.05% by weight;
Column temperature: 35°C; and
Standard sample: poly(sodium acrylate) manufactured by Sowa KagakuCo., Ltd., and poly (sodium acrylate) manufactured by Wako Pure Chemical Industries, Ltd.

Unreacted monomer amount was measured by the following liquid chromatography (HPLC) analysis.
Apparatus: D-7000 model HPLC (manufactured by Hitachi Ltd.);
Column: Shodex RSpak DE-41 (trade name; manufactured by Showa Denko K.K.)
Eluent: 0.1% by weight phosphoric acid aqueous solution;
Flow rate: 1 mL/min;
Column temperature: 40°C;
UV wavelength: 200 nm; and
Measurement solution: 0.0.2% by weight aqueous solution.

### Example 1

A separable flask (1) made of a stainless steel of 1 L capacity and provided with a stirrer, a thermometer, and a reflux condenser was loaded with cyclohexane 340 g, sorbitan monostearate (trade name: Rheodol SP-S10, manufactured by Kao Corporation) 4.59 g (a dispersant) and while the mixture being stirred, nitrogen was introduced at 50 ml/min and heated to 70°C.

A separable flask (2) of 500 ml capacity and provided with a stirrer, a thermometer, and a reflux condenser was loaded with acrylic acid 113.05 g, 2-acryliamido-2-methylpropoanesulfonic acid 36.11 g, a 48% by weight sodium hydroxide aqueous solution 14.54 g, and ion-exchanged water 133.71 g and the mixture was stirred and dissolved. Further while the obtained solution being continuously stirred, nitrogen was introduced into the solution in the separable flask (2) for 25 minutes and then an aqueous solution 42.62 g containing 2,2'-azobis[2-(2-imidazolin-2-yl)propane] dihydrochloride 0.03% by weight, 4,4'-azobis(4-cyanopentanoic acid) 0.04% by weight, and sodium hypophosphite monohydrate 0.03% by weight was added to the solution in the separable flask (2) and further nitrogen was introduced for 5 minutes to adjust the dissolved oxygen in the solution to be 1 mg/L or lower. After that, the monomers prepared in the separable flask (2) was added to a separable flask (1) in 2 hours to carry out polymerization, and aging was carried out for 30 minutes. Successively, the polymerization product was dewatered and cooled to 30°C and then the content was subjected to solid-liquid separation, dried, crushed, and classified to obtain a powder (1) of a mixture of a copolymer 1 and a surfactant. Table 1 shows the results.

### Example 2

A four-neck flask of 5 L capacity provided with a thermometer, a nitrogen introduction pipe, a stirrer, and a reflux condenser was loaded with water 2540 g and the water was heated to 100°C. Next, a 0.7% by weight ammonium persulfate aqueous solution 40 g and a 80% by weight acrylic acid aqueous solution 920 g were continuously dropped in 1 hour at a boiling point to carry out polymerization reaction. Further, a 0.7% by weight ammonium persulfate aqueous solution 160 g was continuously dropped in 5 minutes at a boiling point and on completion of the titration, the reaction system was stirred further for 30 minutes at a boilingpoint of the system to complete a polymerization reaction and obtain a poly(acrylicacid) aqueous solution containing 20% solid matter. The obtained poly(acrylic acid) aqueous solution was dried at 150°C for 2 hours and then the dried product was crushed by a ball mill and classified to obtain an acrylic acid homopolymer powder (2). Table 1 shows results.

### Example 3

A separable flask of 1 L capacity provided with a thermometer, a nitrogen introduction pipe, a stirrer, and a reflux condenser was loaded with an aqueous solution 973 g containing 100% neutralized 37% by weight sodium acrylate (36% by weight in the entire loaded amount) and water 17 g, the aqueous solution was cooled to 10±2°C in an ice bath and then nitrogen gas was flushed to remove oxygen dissolved in the aqueous solution. Ammonium persulfate 0.013% by weight (to polymerization monomers) was added and the aqueous solution weight was adjusted to 1000 g. After 10 minute stirring, the stirring was stopped, and the flask was immersed in a thermostat at 35°C. The aqueous solution started to be opaque after 20 minutes and became gel. After 80 minutes from polymerization initiation, the temperature gave to the highest, 93°C. Four hours later, the gel polymer that became transparent was taken out and crushed to be small and dried by air blow at 190°C for 80 minutes. The obtainedpolymer was crushed by a ball mill and classified to obtain a sodium polyacrylate homopolymer (3).

### Comparative Example 1

The powder (1) of Example 1 was classified to obtain the powder (1') shown in Table 1.

### Comparative Example 2

The homopolymer powder (2) of Example 2 was classified to obtain the powder (2') shown in Table 1.

### Comparative Example 3

The homopolymer powder (3) of Example 3 was classified to obtain the powder (3') shown in Table 1.

### <Solubility test>

Pure water was added to sodium dodecylbenzenesulfonate (LAS) 12.5 g, sodium polyoxyethylene lauryl ether sulfate (AES) 12.5 g, and sodium carbonate 25 g to adjust the entire weight to be 200 g and the mixture was dried to prepare a detergent blend (hereinafter, referred to as base blend). The base blend was mixed with 0.5 g of the carboxylic acid polymer powder (1) of Example 1 to prepare a detergent blend.

After ultrapure water 1 L was poured to a beaker of 1 L capacity and adjusted at 25°C, the water was stirred at 80 rpm by a stirrer. The above-mentioned detergent blend 2 g was added to the beaker. Stirring was stopped every 1 minute and whether the carboxylic acid polymer powder was dissolved or not was confirmed by eye observation to test a solubility (Table 1).

The same procedure was carried out for the carboxylic acid polymer powders of Examples 2 and 3 and Comparative Examples 1 to 3 to test solubilities. A dissolution time of the base blend to which no carboxylic acid polymer powder was added was 4 minutes.

**[Table 1]**

| | Example 1 | Example 2 | Example 3 | Comparative Example 1 | Comparative Example 2 | Comparative Example 3 |
|---|---|---|---|---|---|---|
| Carboxylic acid polymer powder | 1 | 2 | 3 | 1' | 2' | 3' |
| Neutralization ratio of carboxyl group (%) | 0 | 0 | 100 | 0 | 0 | 100 |
| pH of 1 % by weight aqueous solution | - | 3.0 | - | - | 3.0 | - |
| pH of 0.1 % by weight aqueous solution | 3.0 | - | 9.5 | 3.0 | - | 9.5 |
| Average particle diameter (mm) | 100 | - | - | 650 | - | - |
| 20 mesh-on (% by weight) | - | 5 | 2 | - | 55 | 52 |
| 20 mesh-pass and 300 mesh-on(% by weight) | - | 92 | 95 | - | 44 | 47 |
| 300 mesh-pass(% by weight) | - | 3 | 3 | - | 1 | 1 |
| Viscosity of 0.2 % by weight aqueous solution (mPa.s) | 120 | - | 630 | 120 | - | 630 |
| Viscosity of 10 % by weight aqueous solution (mPa.s) | - | 620 | - | - | 620 | - |
| Weight average molecular weight | 5000000 | 800000 | 1500000 | 5000000 | 800000 | 1500000 |
| Unreacted monomer (% by weight) | 0.3 | 0.3 | 0.6 | 0.3 | 0.3 | 0.6 |
| Dissolution time (minute) | 6 | 11 | 24 | 8 or higher | 13 or higher | 30 or higher |
| Sulfonic acid group-containing monomer (% by mole) | 10 0 | 0 | 0 | 10 0 | 0 | 0 |

In Table 1, a raw of "20 mesh-pass and 300 mesh-on" represents content (% by weight) of a carboxylic acid polymer powder not passing through 20 mesh of a sieve and passing through 300 mesh of a sieve according to JIS (Z8801). "20 mesh-on" and "300 mesh-pass" mean the same as above.

The results shown in Table 1 clearly shows that, when the carboxylic acid polymer powders and sulfonic acid group-containing carboxylic acid polymer powders according to the present invention were used, excellent solubility as detergents were exhibited, which shows the detergent and fabric care additive of the present invention efficiently exhibit excellent performance.

### INDUSTRIAL APPLICABILITY

A detergent and fabric care additive according to the present invention contain a carboxylic acid polymer powder excellent in solubility and may be dissolved in a small amount of water in a short time and therefore they are suitably used for laundering by a water-saving type a washing machine and treatment of clothes.

The present application claims priority under 35 U.S.C.§119 to Japanese Patent Application No.2004-094394 filed March 29, 2004, entitled "Detergent and fabric care additive containing carboxylic acid polymer" and Japanese Patent Application No. 2004-095349 filed March 29, 2004, entitled "Detergent and fabric care additive containing carboxylic acid polymer having sulfonic acid group." The contents of these applications are incorporated herein by reference in their entirely.

## Claims

1. A detergent and fabric care additive containing a carboxylic acid polymer powder,
wherein the carboxylic acid polymer powder satisfies the following conditions (a) and (b);
(a) at least one of conditions;
that a 0.2% by weight aqueous solution has a viscosity of 10 mPa.s or higher, and
that a 1% by weight aqueous solution has pH lower than 6 and a 10% by weight aqueous solution has a viscosity of 300 mPa.s or higher,
(b) at least one of conditions;
that 50% by weight or more of the carboxylic acid polymer powder passes through 20 mesh of a sieve according to JIS (Z8801), and
that the average particle diameter is 600 µm or smaller.

2. A detergent and fabric care additive containing a carboxylic acid polymer powder,
wherein the carboxylic acid polymer powder satisfies the following conditions (c) and (d);
(c) a 0.2% by weight aqueous solution of the carboxylic acid polymer powder has a viscosity of 10 mPa.s or higher,
(d) the carboxylic acid polymer powder contains a carboxyl group and a sulfonic acid group and the ratio of the sulfonic acid group-containing monomer relative to 100% by mole of all monomers comprising the polymer is not less than 0.5% by mole and not more than 90% by mole.

3. The detergent and fabric care additive according to claim 1 or 2,
wherein the carboxylic acid polymer powder comprises a (meth)acrylic acid polymer.

4. The detergent and fabric care additive according to any of claims 1 to 3,
wherein the carboxylic acid polymer powder comprises a component derived from a surfactant.
